(19) Europäisches Patentamt
European Patent Office
Office européen des brevets

(11) **EP 4 379 430 A1**

(12) **EUROPEAN PATENT APPLICATION**

(43) Date of publication:
**05.06.2024 Bulletin 2024/23**

(51) International Patent Classification (IPC):
***G01W 1/00*** *(2006.01)*

(21) Application number: **22210652.8**

(52) Cooperative Patent Classification (CPC):
**G01W 1/00;** G01W 2001/003

(22) Date of filing: **30.11.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nordex Energy SE & Co. KG**
**22419 Hamburg (DE)**

(72) Inventors:
• **Parker, Zachary**
**22418 Hamburg (DE)**

• **Streitz, Sebastian**
**75643 Uppsala (SE)**
• **Maass, Christian**
**21224 Rosengarten (DE)**
• **Moser, Wolfgang**
**22417 Hamburg (DE)**

(74) Representative: **Hauck**
**Patentanwaltspartnerschaft mbB**
**Postfach 11 31 53**
**20431 Hamburg (DE)**

(54) **METHOD FOR REMOTE SENSING OF EQUIVALENT POINT TURBULENCE**

(57)  A method for determining values indicative of a distribution of values of the turbulence intensity, wherein the indicative values are equivalent to values determined based on a point measurement comprising:

• Receiving a plurality of remote sensing measurement values of a wind speed and a wind direction,

• Determining standard deviation values of the wind speed within a predetermined time interval for a plurality of time intervals, wherein the standard deviation values are determined from the received remote sensing measurement values of the wind speed and the wind direction, wherein the standard deviation values of the wind speed ($\sigma_u$, $\sigma_v$, $\sigma_w$) are determined with respect to a coordinate system (u, v, w), wherein additionally a standard deviation of a horizontal wind speed ($\sigma_H$) is determined,

• Determining a standard deviation value of the wind speed equivalent to values determined based on the point measurement ($\sigma_{point-equivalent}$) for at least some of the time intervals, wherein the standard deviation values of the wind speed equivalent to values determined based on a point measurement ($\sigma_{point-equivalent}$) is calculated using the standard deviation values as determined from the received remote sensing measurement values,

• Classifying the received remote sensing measurement values for each time interval into at least one wind bin,

• Determining wind bin standard deviation values of the standard deviation values of the wind speed equivalent to values determined based on a point measurement ($\sigma_{bin}(\sigma_{point-equivalent})$), wherein the wind bin standard deviation is calculated as the standard deviation over time intervals classified to the same wind bin, Determining a 90th percentile ($\sigma_{90}$) of the standard deviation of the wind speed equivalent to values determined based on a point measurement ($\sigma_{point-equivalent}$) for each time intervall, and

• Determining a 90th percentile $\left(\sigma_{90}^{TI}\right)$ of a turbulence intensity based on the 90th percentile ($\sigma_{90}$) of the standard deviation of the wind speed for each time interval, wherein the 90th percentile $\left(\sigma_{90}^{TI}\right)$ of a turbulence intensity is indicative for the distribution of the values of the turbulence intensity, when measured using a point measurement.

EP 4 379 430 A1

Fig. 1

**Description**

The invention refers to a method for determining values indicative of a distribution of values of turbulence intensity measurements using a remote sensing device, in particular vertical profiling or VAD Lidar-based measurement devices. The remote sensing measurement values are processed in a way that produces values equivalent to values of the turbulence intensity determined from wind speed measurements using point measurement devices such as cup anemometers or ultrasonic anemometers.

WO 2017/106 323 A1 describes systems, devices and methods for improving Lidar-based turbulence intensity (TI) estimates. A system includes a Lidar instrument configured to determine, based on reflections of emitted light, a plurality of wind speed values. The system also includes a physics-based error correction module configured to determine, based on the wind speed values, at least one Lidar-based meteorological characteristic value. Furthermore, the system is configured to determine, based on the Lidar-based meteorological characteristic value and at least one physical characteristic of the Lidar instrument, at least one modified meteorological characteristic value. The system further includes a statistical error correction module configured to determine, based on the modified meteorological characteristic value and a meteorological characteristic error module using a collocated Lidar-based meteorological characteristic values and in situ instrument based meteorological characteristic values, at least one corrected turbulence intensity estimate.

Kelberlau and Mann disclose in "Better Turbulence Spectra from Velocity-Azimuth Display Scanning Wind Lidar" in Atmos. Mech. Tech. 12, 1871 - 1888, 2019 turbulence velocity spectra. The turbulence velocity spectra are derived from velocity-azimuth display (VAD) scanning wind Lidars and deviate from spectra derived from one-point measurements due to averaging effects and cross-contaminations among the velocity components. Two methods are described to minimize these effects through advanced raw data processing. In one method a time delay is introduced into the raw data processing in order to reduce cross-contamination. This method is based on the assumption of frozen turbulence. Another method uses only certain laser beams in the reconstruction of wind vector components to overcome averaging along the measurement circle. It is described that the combined use of both methods substantially improves the ability of VAD scanning wind Lidars to measure inwind and vertical fluctuations.

Present measurement techniques deployed prior to construction of wind farms (siting phase) are used to predict loads, lifetime and performance of the wind turbines. The turbulence intensity (TI) is often determined from wind speed measurements at or near hub height using point measurement devices mounted on met masts. Models and calculations are based on data obtained from these point measurements. Remote sensing devices can be deployed on the ground without met masts, with more flexibility and at less cost but they measure turbulence intensity and the distribution of turbulence intensity values in a way that is not consistent with the point measurement which is currently required for the load models.

The problem to be solved by the invention is to provide a method for a remote sensing device to provide values indicative of a distribution of turbulence intensity measurements that adequately correspond to point measurements for the purpose of wind turbine load models.

The problem is solved by a method according to claim 1. Preferred embodiments are subject matter of the dependent claims.

The invention provides a method for determining the distribution of the turbulence intensity equivalent to a point measurement for a wind speed and a wind direction. The method starts with receiving a plurality of remote sensing measurement values for wind speed and wind direction. The plurality of remote sensing measurement values is provided for a plurality of time intervals. For each time interval the values are classified by wind speed and/or by wind direction into wind bins. The distribution of measured turbulence intensity values is taken into consideration by calculating the 90th percentile. The received remote sensing measurement values are first converted into standard deviations within a time interval, preferably the standard deviation of approximately 1-second wind speed measurement values within a 10-minute period, wherein the standard deviations $\sigma_u$, $\sigma_v$, $\sigma_w$ are determined in a coordinate system in which e. g. positive u- and v-directions correspond to west and south wind, respectively. The mean wind direction includes an angle $\theta$ with the u-axis. The w-direction is a third direction as a vertical direction perpendicular to the x-y-plane and may correspond to the z-axis. While the u,v,w-system represents a local coordinate system the x,y,z-system can be considered as an absolute coordinate system. For all these directions the standard deviation is calculated. Additionally, a standard deviation of a horizontal wind speed $\sigma_H$ is determined which refers to the standard deviation in the u-v-plane. The standard deviation is calculated for the measurement values falling within the time intervals. From these pre-processed remote sensing measurement values a standard deviation equivalent to a point measurement is determined. Furthermore, a wind bin standard deviation of the standard deviation of the wind speed equivalent to a point measurement is determined from a series of standard deviations of the wind speed equivalent to a point measurement. The wind bin standard deviation is calculated as the standard deviation over time intervals classified to have the same wind bin. The received remote sensing measurement values are divided into a plurality of wind bins in that one wind bin is assigned to each time interval. The wind bin standard deviation calculates the standard deviation of a measuerement value to which the same wind bin was assigned. Based on the 90th percentile of the standard deviation for each time interval, the 90th percentile of a turbulence intensity equivalent to a point measurement is determined for each each time interval. The 90th percentile of the turbulence intensity is used to account for the distribution of the turbulence intensity values derived from the remote measurement of the wind speed. This value, based on the 90th percentile of the turbulence intensity, is suitable for load models of wind turbines which have been tuned to evaluate a turbulence intensity measured at or near a height using point measurement devices such as cup anemometers or ultrasonic anemometers. For the inventive method it is important to notice that the calculations are carried out over time intervals of standard deviations in combination with the wind bin standard deviation.

According to a preferred embodiment wind speed bins and wind direction bins are assigned to the measurement value for the time interval. In this embodiment each wind bin contains the received remote sensing measurement values falling within a time interval of wind speeds and within a predetermined interval of wind directions. For each time interval one or two values of the corresponding wind bin either wind speed bin or wind direction bin are assigned.

In a preferred embodiment determining the standard deviation values of the wind speed equivalent to values determined based on a point measurement is based on the standard deviations in the local coordinate system, a mean horizontal wind speed and its standard deviation and a mean wind direction. All these values contribute to determine the standard deviation equivalent to a point measurement.

In a further embodiment, the wind bin standard deviation values of the standard deviation values of the wind speed equivalent to values determined based on a point measurement are determined for each time interval. In this step all time intervals belonging to the same wind bin are evaluated, this is done for each wind bin. This is applied to determine the 90th percentile of the standard deviation $\sigma_{90}$ which will adequately match the 90th percentile of the standard deviation of the point measurement. Using the wind bin standard deviation of the standard deviation, it is possible to calculate the 90th percentile of the standard deviation according to:

$$\sigma_{90} = \sigma_{point-equivalent} + \alpha \cdot \sigma_{bin} \left( \sigma_{point-equivalent} \right).$$

The coefficient $\alpha$ corresponds to a value >1, e.g. the 10 % case within the Gaussian distribution.

Based on the 90th percentile of the standard deviation it is possible to calculate the 90th percentile of the turbulence intensity by dividing through the value of the wind speed within the wind speed bin and within the wind direction bin. This may be the mean value of wind speed within the wind speed bin and the wind direction bin. In order to calculate the standard deviation equivalent to a point measurement it is helpful to look for a linear combination of $\sigma_H$, $\sigma_u$ und $\sigma_v$. Furthermore, there is defined a function f( , , ) mapping WS, $\theta$ and $\sigma_w$ to a real number:

$$\sigma_{point-equivalent} = a \cdot \sigma_H + b \cdot \sigma_u + c \cdot \sigma_v + f(WS, \theta, \sigma_w)$$

In the above expression $\sigma_H$ is the standard deviation of a horizontal wind speed, $\sigma_u$ and $\sigma_v$ are the standard deviations of the wind speed in a mean wind direction and perpendicular thereto. WS denotes the vertical wind speed while $\theta$ defines the angle of the mean wind direction from the u-axis. It is interesting to notice that the above expression uses four standard deviations of the wind speed with respect to three axes. Even though $\sigma_H$ is statistically not independent from $\sigma_u$ and $\sigma_v$, better results can be achieved by including $\sigma_H$ and using four different standard deviations of the wind speed.

In a preferred embodiment, the standard deviation values of the wind speed equivalent to values determined based on a point measurement are calculated as a linear combination of these values:

$$\sigma_{point-equivalent} = A \cdot \sigma_H + B \cdot WS + C \cdot \theta + D \cdot \sigma_u + E \cdot \sigma_v + F \cdot \sigma_w + G,$$

wherein (A, B, C, D, E, F, G) is a set of real numbers, which are determined through multiple regression.

In a preferred embodiment, the remote sensing measurement values are Lidar-based values for a wind speed and a wind direction.

The invention is explained with respect to the following embodiment:

Figure 1    shows the local u,v,w-coordinate system with respect to the absolute x,y,z-coordinate system of the remote measuring device,

Figure 2     shows the cup representative turbulence intensity prediction method,

Figure 3     shows a comparison of the accurate prediction of a cup representative turbulence intensity and the 90th percentile turbulence intensity which is used for load estimation using point-equivalent Lidar and measured Lidar data, and

Figure 4     shows an example table of measured Lidar values and their representation as well as predicted point-equivalent values.

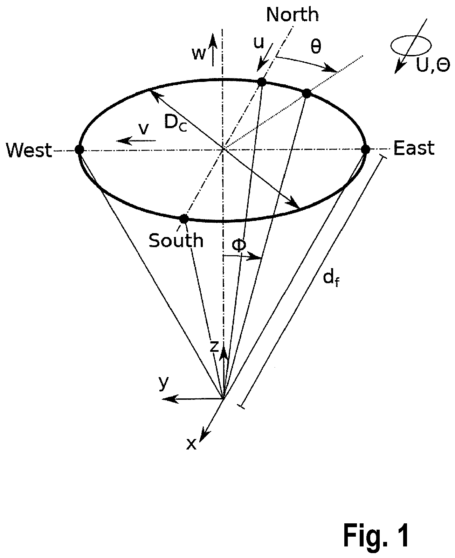

Figure 1 is taken from the above-mentioned prior art document of Kelberlau et al. It shows the relevant Lidar geometry definitions. A mean wind is coming from north-north-east direction which has an angle $\theta$ with respect to the u-axis. The example shows a mean wind direction in the u-v-plane. The absolute x,y,z-coordinate system is indicated at the tip of the cone and represents the orientation of the remote measuring device. Assuming the angular orientation of the absolute x,y,z-coordinate system is known with respect to a north-south orientation and an east-west orientation the measured values of the wind speed can be calculated with respect to the local u,v,w-coordinate system by simple trigonometry. Thereby it may be assumed that the w-axis and the z-axis point in the same direction.

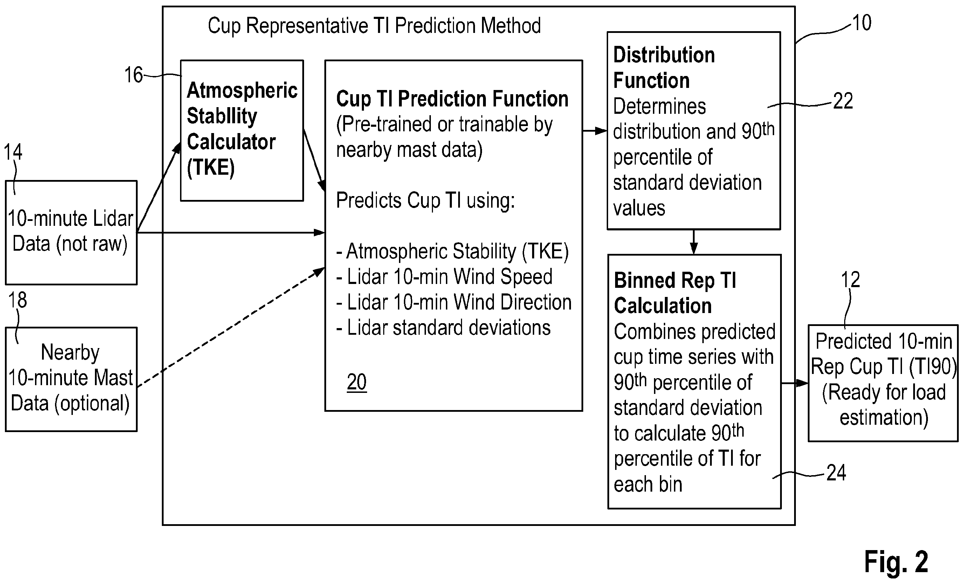

Figure 2 shows the method of the point measurement-equivalent representative turbulence intensity prediction. The main process steps are carried out in block 10 which delivers as a result the predicted 10 minutes representative point measurement-equivalent turbulence intensity which can be used for load estimations. The method works with pre-processed 10 minutes Lidar data 14. These Lidar data are binned into 10-minute intervals and to each interval the average value of the 10-minute interval is assigned. In a first step an atmospheric stability calculator is used to calculate atmospheric stability based on elements of the coherent turbulence kinetic energy (CTKE). The value of CTKE is given as:

$$\text{CTKE} = \tfrac{1}{2}\left(\sigma^2{}_u + \sigma^2{}_v + \sigma^2{}_w\right).$$

The CTKE value and the other Lidar measured values are applied to a cup prediction turbulence intensity module. This step determines the standard deviation of the wind speed equivalent to a point measurement and the standard deviation of the standard deviation of the wind speed equivalent to the point measurement. These calculations of the standard deviations are carried out for a time series. As will be explained below the standard deviation equivalent to a point measurement is also a time series having its own fluctuations and therefore its own standard deviation. For calculating the standard deviation of the wind speed equivalent to a point measurement optionally nearby 10-minute point measurement data can be used. This is, they can be used to determine the training of the prediction function. In the present invention a linear regression depending on $\sigma_H$, WS, $\theta$ and $\sigma_u$, $\sigma_v$, $\sigma_w$ is used. The point measurement data can be used to fine-tune these parameters. If, however, no point measurement data are available the standard parameters to calculate $\sigma_{point\text{-}equivalent}$ are used.

In the final step 24 a binned representative TI calculation is carried out. Here the time series with a corrected variance is used to calculate the 90th percentile of TI for each bin. This leads to the final result in step 12 which can be used for load calculations.

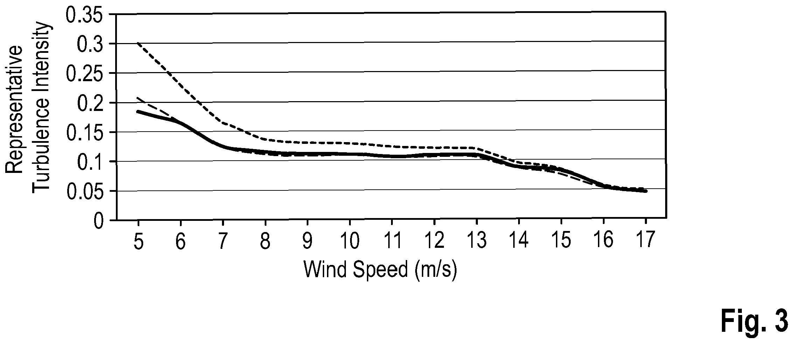

Figure 3 shows the result of the method where the representative turbulence intensity is plotted over the wind speed. The continuous line shows the measured cup representative turbulence intensity starting at a wind speed of 5 m/s. The dotted line is the representative turbulence intensity calculated from the raw Lidar data. As clearly can be seen from this data, for wind speeds smaller than 15 m/s the values for the turbulence intensity are too large. Furthermore, the dashed line shows the turbulence intensity equivalent to a cup according to the dashed line. It can be seen that for wind speeds above 6 m/s the dashed line and the continuous line match almost.

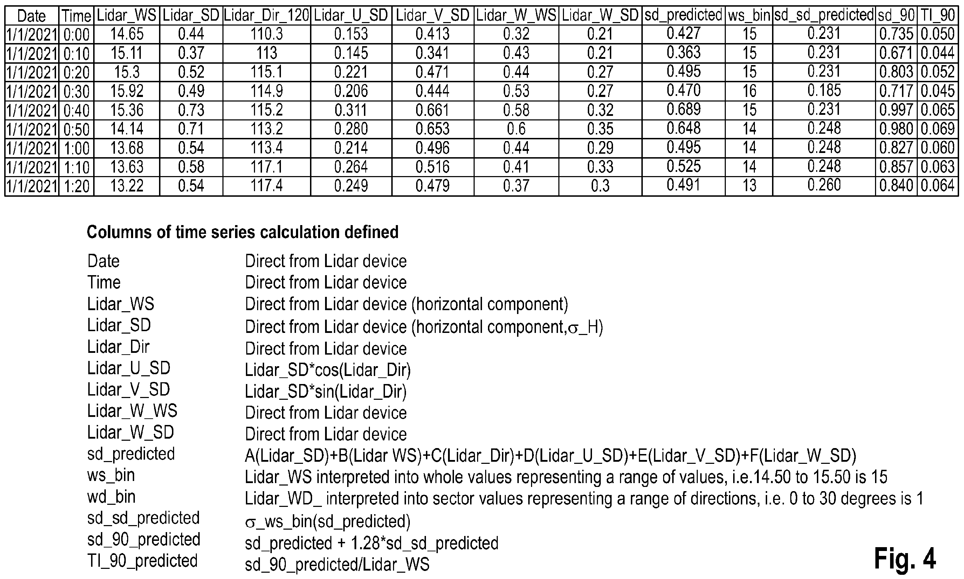

Figure 4 shows a table and a legend to the table to explain the calculation according to the invention. Every line shows the average value within a 10-minute interval. The values Lidar$_{WS}$, Lidar$_{SD}$ referring to windspeed (WS) and standard deviation (SD) directly come from the Lidar measuring device. Based on these values the Lidar$_{USD}$ ($\sigma_u$) and Lidar$_{VSD}$ ($\sigma_v$) are calculated depending on the wind direction. The Lidar device furthermore gives the value Lidar$_{WWS}$ and Lidar$_{WSD}$, wherein Lidar$_{WWS}$ denotes the wind speed in a vertical direction and Lidar$_{WSD}$ the standard deviation of the wind speed in the vertical direction.

$\sigma_{point\text{-}equivalent}$ is called SD$_{predicted}$ and is calculated by using the parameters A to F. The value of SD$_{predicted}$ corresponds to $\sigma_{point\text{-}equivalent}$. Based on these values the wind bin standard deviation of the standard deviation $\sigma_{point\text{-}equivalent}$ is calculated. It is important to notice for the wind bin standard deviation of the standard deviation that the values are evaluated with respect to one wind bin. Looking to lines 1, 2, 3, and 5 of the table we see that wind speed bin 15 was assigned to the time intervals. The wind bin standard deviation is calculated as the standard deviation of the wind speeds in the wind bins of the lines 1, 2, 3, and 5, that is 14.65, 15.11, 15.3, and 15.36. In this sense the wind bin standard deviation is an indicator for the fluctuation of the wind speed/wind direct within one single win bin. Finally, the value TI$_{90}$ is obtained by dividing the 90th percentile of the standard deviation, SD$_{90}$ by the wind speed in the time interval.

**Claims**

1. A method for determining values indicative of a distribution of values of the turbulence intensity, wherein the indicative values are equivalent to values determined based on a point measurement comprising:

   • Receiving a plurality of remote sensing measurement values of a wind speed and a wind direction,
   • Determining standard deviation values of the wind speed within a predetermined time interval for a plurality of time intervals, wherein the standard deviation values are determined from the received remote sensing measurement values of the wind speed and the wind direction, wherein the standard deviation values of the wind speed ($\sigma_u$, $\sigma_v$, $\sigma_w$) are determined with respect to a coordinate system (u, v, w), wherein additionally a standard deviation of a horizontal wind speed ($\sigma_H$) is determined,
   • Determining a standard deviation value of the wind speed equivalent to values determined based on the point measurement ($\sigma_{point-equivalent}$) for at least some of the time intervals, wherein the standard deviation value of the wind speed equivalent to values determined based on a point measurement ($\sigma_{point-equivalent}$) is calculated using the standard deviation values as determined from the received remote sensing measurement values,
   • Classifying the received remote sensing measurement values for each time interval into at least one wind bin,
   • Determining wind bin standard deviation values of the standard deviation values of the wind speed equivalent to values determined based on a point measurement ($\sigma_{bin}(\sigma_{point-equivalent})$), wherein the wind bin standard deviation is calculated as the standard deviation over time intervals classified to the same wind bin, Determining a 90$^{th}$ percentile ($\sigma_{90}$) of the standard deviation of the wind speed equivalent to values determined based on a point measurement ($\sigma_{point-equivalent}$) for each time interval, and

   • Determining a 90$^{th}$ percentile $\left(\sigma_{90}^{TI}\right)$ of a turbulence intensity based on the 90$^{th}$ percentile ($\sigma_{90}$) of the standard deviation of the wind speed for each time interval, wherein the 90$^{th}$ percentile $\left(\sigma_{90}^{TI}\right)$ of a turbulence intensity is indicative for the distribution of the values of the turbulence intensity, when measured using a point measurement.

2. Method of claim 1, wherein the values of the time intervals are classified into a wind speed bin and/or a wind direction bin.

3. Method of claim 1 or 2, wherein determining the standard deviation of the wind speed equivalent to values determined based on a point measurement ($\sigma_{point-equivalent}$) is based on at least one of

   • the standard deviations ($\sigma_u$, $\sigma_v$, $\sigma_w$) in the coordinate system (u, v, w),
   • a mean horizontal wind speed ($WS_H$),
   • a standard deviation of a horizontal wind speed ($\sigma_H$), and
   • a mean horizontal wind direction ($WD_H$) with an angle ($\theta$).

4. Method according to one of the claims 1 to 3, wherein the wind bin standard deviation of the standard deviation of the wind speed equivalent to values determined based on a point measurement ($\sigma_{bin}(\sigma_{point-equivalent})$) is determined for each time interval based a wind speed bin, wherein the wind speed bin is assigned to the values of a time interval based on a mean horizontal wind speed ($WS_H$) within the time interval.

5. Method according to one of claims 1 to 4, wherein the 90$^{th}$ percentile ($\sigma_{90}$) of the standard deviation of the wind speed for each wind bin is determined according to:

$$\sigma_{90} = \sigma_{point-equivalent} + \alpha \cdot \sigma_{bin}(\sigma_{point-equivalent}),$$

   wherein $\alpha$ is a real coefficient greater than 1.

6. Method of one of the preceding claims, wherein the 90$^{th}$ percentile $\left(\sigma_{90}^{TI}\right)$ of the turbulence intensity is determined by:

$$\sigma_{90}^{TI} = {\sigma_{90}}/{WS_{bin}},$$

wherein $WS_{bin}$ denotes a value of the mean wind speed within the time interval.

7. Method according to one of the preceding claims, wherein the standard deviation equivalent to a point measurement ($\sigma_{\text{point-equivalent}}$) is calculated as follows:

$$\sigma_{\text{point-equivalent}} = a \cdot \sigma_H + b \cdot \sigma_u + c \cdot \sigma_v + f(WS, \theta, \sigma_w),$$

wherein (a, b, c) is a set of real coefficients and $f(\cdot,\cdot,\cdot)$ is a function mapping its three arguments to a real value.

8. Method according to claim 7, wherein the standard deviation equivalent to a point measurement ($\sigma_{\text{point-equivalent}}$) is calculated as follows:

$$\sigma_{\text{point-equivalent}} = A \cdot \sigma_H + B \cdot WS + C \cdot \theta + D \cdot \sigma_u + E \cdot \sigma_v + F \cdot \sigma_w + G,$$

wherein (A, B, C, D, E, F, G) is a set of real numbers, which are determined through multiple regression.

9. Method of one of the claims 1 to 8, wherein the remote sensing measurement values are Lidar-based measurement values for the wind speed and the wind direction.

10. Method according to one of the preceding claims, wherein the 90th percentile of the turbulence intensity $\left(\sigma_{90}^{TI}\right)$ equivalent to a point measurement for each time interval is used for a load calculation of a wind turbine.

11. Method according to one of the preceding claims, wherein the plurality of remote sensing measurement values is measured using a remote sensing device, in particular vertical profiling or velocity-azimuth display (VAD) Lidar-based measurement devices.

Fig. 1

Cup Representative TI Prediction Method

**Atmospheric Stability Calculator (TKE)** — 16

**Cup TI Prediction Function**
(Pre-trained or trainable by nearby mast data)

Predicts Cup TI using:

- Atmospheric Stability (TKE)
- Lidar 10-min Wind Speed
- Lidar 10-min Wind Direction
- Lidar standard deviations

<u>20</u>

10-minute Lidar Data (not raw) — 14

Nearby 10-minute Mast Data (optional) — 18

**Distribution Function**
Determines distribution and 90th percentile of standard deviation values — 22

**Binned Rep TI Calculation**
Combines predicted cup time series with 90th percentile of standard deviation to calculate 90th percentile of TI for each bin — 24

Predicted 10-min Rep Cup TI (TI90) (Ready for load estimation) — 12

10 —

EP 4 379 430 A1

**Fig. 2**

Fig. 3

| Date | Time | Lidar_WS | Lidar_SD | Lidar_Dir_120 | Lidar_U_SD | Lidar_V_SD | Lidar_W_WS | Lidar_W_SD | sd_predicted | ws_bin | sd_sd_predicted | sd_90 | TI_90 |
|---|---|---|---|---|---|---|---|---|---|---|---|---|---|
| 1/1/2021 | 0:00 | 14.65 | 0.44 | 110.3 | 0.153 | 0.413 | 0.32 | 0.21 | 0.427 | 15 | 0.231 | 0.735 | 0.050 |
| 1/1/2021 | 0:10 | 15.11 | 0.37 | 113 | 0.145 | 0.341 | 0.43 | 0.21 | 0.363 | 15 | 0.231 | 0.671 | 0.044 |
| 1/1/2021 | 0:20 | 15.3 | 0.52 | 115.1 | 0.221 | 0.471 | 0.44 | 0.27 | 0.495 | 15 | 0.231 | 0.803 | 0.052 |
| 1/1/2021 | 0:30 | 15.92 | 0.49 | 114.9 | 0.206 | 0.444 | 0.53 | 0.27 | 0.470 | 16 | 0.185 | 0.717 | 0.045 |
| 1/1/2021 | 0:40 | 15.36 | 0.73 | 115.2 | 0.311 | 0.661 | 0.58 | 0.32 | 0.689 | 15 | 0.231 | 0.997 | 0.065 |
| 1/1/2021 | 0:50 | 14.14 | 0.71 | 113.2 | 0.280 | 0.653 | 0.6 | 0.35 | 0.648 | 14 | 0.248 | 0.980 | 0.069 |
| 1/1/2021 | 1:00 | 13.68 | 0.54 | 113.4 | 0.214 | 0.496 | 0.44 | 0.29 | 0.495 | 14 | 0.248 | 0.827 | 0.060 |
| 1/1/2021 | 1:10 | 13.63 | 0.58 | 117.1 | 0.264 | 0.516 | 0.41 | 0.33 | 0.525 | 14 | 0.248 | 0.857 | 0.063 |
| 1/1/2021 | 1:20 | 13.22 | 0.54 | 117.4 | 0.249 | 0.479 | 0.37 | 0.3 | 0.491 | 13 | 0.260 | 0.840 | 0.064 |

**Columns of time series calculation defined**

| | |
|---|---|
| Date | Direct from Lidar device |
| Time | Direct from Lidar device |
| Lidar_WS | Direct from Lidar device (horizontal component) |
| Lidar_SD | Direct from Lidar device (horizontal component,$\sigma$_H) |
| Lidar_Dir | Direct from Lidar device |
| Lidar_U_SD | Lidar_SD*cos(Lidar_Dir) |
| Lidar_V_SD | Lidar_SD*sin(Lidar_Dir) |
| Lidar_W_WS | Direct from Lidar device |
| Lidar_W_SD | Direct from Lidar device |
| sd_predicted | A(Lidar_SD)+B(Lidar WS)+C(Lidar_Dir)+D(Lidar_U_SD)+E(Lidar_V_SD)+F(Lidar_W_SD) |
| ws_bin | Lidar_WS interpreted into whole values representing a range of values, i.e.14.50 to 15.50 is 15 |
| wd_bin | Lidar_WD_ interpreted into sector values representing a range of directions, i.e. 0 to 30 degrees is 1 |
| sd_sd_predicted | $\sigma$_ws_bin(sd_predicted) |
| sd_90_predicted | sd_predicted + 1.28*sd_sd_predicted |
| TI_90_predicted | sd_90_predicted/Lidar_WS |

**Fig. 4**

Europäisches
Patentamt

European
Patent Office

Office européen
des brevets

# EUROPEAN SEARCH REPORT

Application Number

**EP 22 21 0652**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/220935 A1 (BONANNI PIERINO GIANNI [US] ET AL) 14 July 2022 (2022-07-14) * abstract * * paragraphs [0002] – [0014], [0016] – [0020], [0223] – [0025] * ----- | 1-11 | INV. G01W1/00 |
| A | US 2020/264313 A1 (NEWMAN JENNIFER FRANCES [US] ET AL) 20 August 2020 (2020-08-20) * abstract * * the whole document * ----- | 1-11 | |

TECHNICAL FIELDS
SEARCHED      (IPC)

G01W

The present search report has been drawn up for all claims

| Place of search | Date of completion of the search | Examiner |
|---|---|---|
| The Hague | 10 May 2023 | Bagnera, Carlo |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

............................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 22 21 0652

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | | Publication date | Patent family member(s) | | Publication date |
|---|---|---|---|---|---|
| US 2022220935 | A1 | 14-07-2022 | CN | 114753973 A | 15-07-2022 |
| | | | EP | 4027009 A1 | 13-07-2022 |
| | | | JP | 2022107523 A | 21-07-2022 |
| | | | KR | 20220100526 A | 15-07-2022 |
| | | | US | 2022220935 A1 | 14-07-2022 |
| US 2020264313 | A1 | 20-08-2020 | US | 2020264313 A1 | 20-08-2020 |
| | | | WO | 2017106323 A1 | 22-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2017106323 A1

**Non-patent literature cited in the description**

• **KELBERLAU ; MANN.** Better Turbulence Spectra from Velocity-Azimuth Display Scanning Wind Lidar. *Atmos. Mech. Tech.,* 2019, vol. 12, 1871-1888